# EUROPÄISCHE PATENTSCHRIFT

(11) **EP 3 257 060 B1**
(45) Veröffentlichungstag und Bekanntmachung des Hinweises auf die Patenterteilung: **07.04.2021**
(21) Anmeldenummer: 16702881.0
(22) Anmeldetag: 03.02.2016
(51) Int. Cl.: H01F 7/06

(54) **MAGNETVENTIL, VENTILEINRICHTUNG MIT DERARTIGEM MAGNETVENTIL, FAHRZEUG DAMIT UND VERFAHREN ZUM BETREIBEN EINES DERARTIGEN MAGNETVENTILS**
SOLENOID VALVE, VALVE DEVICE WITH A SOLENOID VALVE OF THIS TYPE, VEHICLE WITH SUCH A VALVE AND METHOD FOR OPERATING A SOLENOID VALVE OF THIS TYPE
ÉLECTROVANNE, DISPOSITIF DE VANNE AVEC UNE ÉLECTROVANNE DE CE GENRE, VÉHICULE AVEC LEDIT DISPOSITIF ET PROCÉDÉ DE FONCTIONNEMENT D'UNE ÉLECTROVANNE DE CE GENRE

(30) Priorität: 11.02.2015 DE 102015001584
(43) Veröffentlichungstag der Anmeldung: 20.12.2017
(73) Patentinhaber: WABCO Europe BVBA, 1170 Brussels (BE)
(72) Erfinder: BIALON, Rafal, 55-200 Olawa (PL); TEICHMANN, Andreas, 30916 Isernhagen (DE)
(74) Vertreter: Koschnitzki, Thomas
(86) Internationale Anmeldenummer: PCT/EP2016/000175
(87) Internationale Veröffentlichungsnummer: WO 2016/128120

(56) Entgegenhaltungen:
- DE-A1- 10 315 282
- DE-T2- 69 408 429
- US-A1- 2001 043 450

## Beschreibung

Die Erfindung betrifft ein Magnetventil, insbesondere ein elektropneumatisches Ventil für eine Druckluftanlage, eine Ventileinrichtung mit einem derartigen Magnetventil, sowie ein Verfahren zum Betreiben eines derartigen Magnetventils. Herkömmlicherweise nutzen Magnetventile die Anziehungswirkung aus, welche von einem magnetischen Feld einer stromdurchflossen Spule auf einen ferromagnetischen Magnetanker ausgeübt wird, um mittels dieser elektromagnetischen Kräfte einen Ventilkolben zu steuern. Derartige Magnetventile werden beispielsweise in Druckluftanlagen von elektronisch geregelten Bremssystemen (EBS) von Nutzfahrzeugen und/oder Anhängern eingesetzt, um abhängig von ihrer Bestromung Brems- oder Steuerdrücke zu steuern.

Um die Wirtschaftlichkeit eines derartigen Magnetventils zu erhöhen, sind verschiedene Peak and Hold-Schaltungen zum Betreiben des Magnetventils bekannt. Mittels dieser Peak and Hold-Schaltungen wird dem Magnetventil in einer Anzugsphase ein ausreichend großer Anzugsstrom (Peak) und in einer nachfolgenden Haltephase zum Halten des angezogenen Magnetankers ein geringerer Haltestrom (Hold) bereitgestellt. Somit wird ein energiesparender Betrieb des Magnetventils ermöglicht.

DE 10 2013 000 879 A1 zeigt ein elektromagnetisches Ventil, insbesondere ein elektropneumatisches Ventil für ein Druckluft-System, wobei das elektromagnetische Ventil einen Elektromagneten mit einem Spulenkörper aufweist sowie mindestens zwei auf dem Spulenkörper angeordnete Teilspulen. Die mindestens zwei Teilspulen können alternativ parallel oder in Reihe geschaltet werden. Werden die Teilspulen parallel geschaltet, fließt durch den Elektromagneten ein relativ hoher Anzugsstrom, um einen Magnetanker zu bewegen. Zum Halten des Magnetankers genügt ein geringerer Haltestrom und die Teilspulen werden in Reihe geschaltet. Die Ansteuerung der Teilspulen erfolgt über eine Steuereinrichtung und Schaltmittel, wie beispielsweise Bipolartransistoren, wobei die Steuereinrichtung, die Transistoren und weitere Bauelemente auf einem Schaltungsträger angeordnet sind.

Herkömmlicherweise ist daher für einen energiesparenden Betrieb des Magnetventils stets eine separate Steuereinrichtung mit einer Schaltung zum Ansteuern des Magnetventils notwendig, wobei der für den Betrieb des Magnetventils benötigte Strom, insbesondere der Anzugsstrom, in Abhängigkeit einer Zeitkonstante geregelt wird.

Der Erfindung liegt die Aufgabe zugrunde, ein Magnetventil dahingehend zu verbessern, dass es energiesparend betrieben werden kann sowie besonders platzsparend und kostengünstig in der Herstellung ist.

Die Erfindung löst diese Aufgabe mit einem Magnetventil mit den Merkmalen gemäß Anspruch 1, mit einer Ventileinrichtung mit den Merkmalen gemäß Anspruch 10, sowie mit einem Verfahren zum Betreiben eines Magnetventils mit den Merkmalen gemäß Anspruch 15.

Das erfindungsgemäße Magnetventil ist bevorzugt als elektropneumatisches Ventil für eine Druckluftanlage einsetzbar und weist einen Elektromagneten mit einem entlang einer Spulenlängsachse beweglich angeordneten Magnetanker auf, wobei der Magnetanker das Betätigungselement des Magnetventils ist. Aufgrund eines an einer Spule angelegten Stromes bewegt sich der Magnetanker und betätigt bzw. schaltet das Magnetventil, wobei das Magnetventil nicht nur auf zwei Schaltzustände beschränkt ist. Vielmehr sind bei besonderen Bauformen, beispielsweise bei einem Proportionalventil, zwischen einer Anzugsphase und einer Haltephase beliebig viele Schaltzustände möglich.

Ferner weist das Magnetventil mindestens zwei voneinander verschiedene Bestromungszustände des Elektromagneten auf sowie mindestens ein elektrisches Schaltmittel, welches derart ausgestaltet ist, um den Elektromagneten von einem Bestromungszustand in einen anderen Bestromungszustand umzuschalten. Die verschiedenen Bestromungszustände des Elektromagneten unterscheiden sich dabei durch unterschiedliche Stromstärken des durch den Elektromagneten fließenden Stromes und somit durch verschieden große elektromagnetische Kräfte, welche auf den Magnetanker des Elektromagneten wirken. Durch den Betrieb des Magnetventils mit verschiedenen Bestromungszuständen des Elektromagneten lässt sich vorteilhafterweise Energie einsparen trotz gleich großer Bauweise bzw. die Abmessungen des Magnetventils verringern bei gleichem Energieverbrauch des Magnetventils.

Der geringere Stromverbrauch während der Haltephase des Magnetventils sorgt ferner für eine geringere Wärmeemission, da vorteilhafterweise die Eigenerwärmung des Elektromagneten gesenkt wird.

Das mindestens eine elektrische Schaltmittel des Magnetventils ist derart ausgestaltet, um den Bestromungszustand des Elektromagneten automatisch umzuschalten, wobei das Umschalten des Elektromagneten von einem Bestromungszustand in einen anderen Bestromungszustand in Abhängigkeit eines vom Elektromagneten erzeugten magnetischen Feldes oder in Abhängigkeit einer Position des Magnetankers oder dass mittels des mindestens einen elektrischen Schaltmittels (30) der Bestromungszustand des Elektromagneten in Abhängigkeit einer Position eines Ventilkolbens (48) eines von dem Magnetventil steuerbaren Ventils automatisch umschaltbar ist.

Dies hat den Vorteil, dass das erfindungsgemäße Magnetventil selbsttätig in einen energiesparenden Betrieb umschaltet und der Platz und der Aufwand für eine separate Steuereinrichtung zum Ansteuern des Elektromagneten entfallen, wodurch das Magnetventil vorteilhafterweise eine kompaktere Bauweise erhält. Ferner kann das elektrische Schaltmittel vorteilhafterweise einfach in ein herkömmliches Magnetventil integriert werden, so dass das Magnetventil die herkömmlichen, standardisierten Schnittstellen bzw. Anschlusskomponenten, beibehalten kann. Dadurch bleibt das erfindungsgemäße Magnetventil universell einsetzbar, z.B. als Basissteuerventil mit verschiedenen Durchflussdurchmessern.

Ferner ist eine Ausführungsform des Magnetventils aufgrund von standardisierten Schnittstellen für verschiedene Aufgaben und in verschiedenen Anwendungen einsetzbar. Dadurch wird vorteilhafterweise die Herstellung des Magnetventils in großen Stückzahlen ermöglicht, wodurch sich die Herstellungskosten reduzieren lassen.

Gemäß einer Weiterbildung der Erfindung weist der Elektromagnet des Magnetventils neben einem Kern und dem Magnetanker eine Spule auf, wobei die Spule durch mindestens zwei oder mehr Teilspulen gebildet wird. Die Teilspulen können dabei unterschiedliche Größen, Windungszahlen und/oder Induktivitäten aufweisen, wobei die Teilspulen jedoch einen gemeinsamen Magnetkreis aufweisen.

Zum Herstellen eines ersten Bestromungszustandes sind die Teilspulen mittels des mindestens einen elektrischen Schaltmittels parallel geschaltet oder aber mindestens eine Teilspule ist mittels des mindestens einen elektrischen Schaltmittels überbrückt, so dass ein relativ hoher Anzugsstrom durch den Elektromagneten fließt, welcher derart dimensioniert ist, um eine ausreichend hohe magnetische Anzugskraft des Magnetankers zu erzielen, um den Magnetanker in einer Anzugsphase zu bewegen.

Der Erfindung liegt die Erkenntnis zugrunde, dass zum Halten des Magnetventils in einem betätigten Zustand des Magnetventils ein geringerer Strom benötigt wird als der Strom, der gebraucht wird, für das Erreichen des betätigten Zustandes vom stromlosen Ruhezustand aus.

Zum Herstellen eines zweiten Bestromungszustandes sind die Teilspulen daher mittels des mindestens einen elektrischen Schaltmittels in Reihe geschaltet, so dass ein geringerer Strom, nämlich ein sog. Haltestrom, durch den Elektromagneten fließt als während des ersten Bestromungszustandes. Dabei ist der Haltestrom derart bemessen, um den Magnetanker in seiner angezogenen Position zu halten, was jedoch eine geringere magnetische Anzugskraft erfordert. Aufgrund der Reihenschaltung der Teilspulen des Elektromagneten reduzieren sich vorteilhafterweise der Stromfluss und somit die Verlustleistung des Elektromagneten.

Weist der Elektromagnet des Magnetventils mehr als zwei Teilspulen auf, können diese beliebig in Reihe und parallel geschaltet sein, so dass sich dadurch vorteilhafterweise mehr als zwei Bestromungszustände des Elektromagneten erzeugen lassen.

Beispielsweise ist ein zu kräftiger Anschlag des Magnetankers im letzten Augenblick der Anzugsphase ungünstig. Bei mehr als zwei Teilspulen, welche zu Beginn der Anzugsphase alle parallel geschaltet sind, lassen sich diese nach und nach umschalten, bis am Ende der Anzugsphase alle Teilspulen in Reihe geschaltet sind. Dadurch kann vorteilhafterweise eine zu große Steigerung der Anzugskraft des Magnetankers vermieden werden.

In einer Weiterbildung der Erfindung ist mindestens ein elektrisches Schaltmittel ein Reed-Schalter. Bei einem Reed-Schalter sind üblicherweise ferromagnetische Kontaktzungen in einem Glasrohr eingeschmolzen. Diese Kontaktzungen können von einem außen anliegenden magnetischen Feld bewegt werden. Es wird bei Reed-Schaltern zwischen Wechslern, Schließer (Normally Open, d.h. im Ruhezustand geöffnet) oder Öffner (Normally Closed, d.h. im Ruhezustand geschlossen) unterschieden. Bei einem Schließer beispielsweise überlappen sich die Kontaktzungen und weisen einen geringen Abstand zueinander auf. Wirkt ein axiales Magnetfeld auf den Schalter, bewegen sich die beiden Kontaktzungen aufeinander zu und der Schalter schließt. Bei einem Öffner verhält es sich umgekehrt. Dort liegen die Kontaktzungen ohne ein magnetisches Feld an einem unmagnetischen Kontakt an. Ein Wechsler weist einen Ruhekontakt und einen Arbeitskontakt auf, wobei ohne ein anliegendes magnetisches Feld die Kontaktzunge mit dem Ruhekontakt verbunden ist und bei einem anliegenden Magnetfeld die Kontaktzunge mit dem Arbeitskontakt verbunden ist. Wird ein derartiger Reed-Schalter derart in dem Magnetventil angeordnet, dass das von dem Elektromagneten erzeugte magnetische Feld auf diesen Reed-Schalter einwirken kann, schaltet der Reed-Schalter vorteilhafterweise automatisch, ohne zusätzliche Schaltvorgaben, wie beispielsweise eine Zeitdauer.

In einer Weiterbildung der Erfindung ist mindestens ein elektrisches Schaltmittel ein Hall-Sensor. Ein Hall-Sensor nutzt den Hall-Effekt zur Messung von Magnetfeldern. Dazu wird der Hall-Sensor von einem Strom durchflossen und liefert eine Ausgangsspannung, wenn der Hall-Sensor in ein senkrecht zu dem Strom verlaufendes Magnetfeld gebracht wird. Dabei ist die Spannung proportional zum Produkt aus magnetischer Feldstärke und Strom.

Da sich die Stärke des magnetischen Feldes ändert, wenn der Magnetanker angezogen ist und der Luftspalt verschlossen ist, kann der Hall-Sensor diese Änderung des Magnetfeldes erkennen und die Ausgangsspannung entsprechend regeln. So können beispielsweise von dem Hall-Sensor Transistoren angesteuert werden, die die Teilspulen des Elektromagneten in Reihe oder parallel schalten oder die eine Teilspule oder einen Vorwiderstand überbrücken und somit den Elektromagneten von einem Bestromungszustand in einen anderen Bestromungszustand schalten.

In einer weiteren Weiterbildung der Erfindung ist das elektrische Schaltmittel innerhalb eines durch den Elektromagneten erzeugten magnetischen Feldes angeordnet, wobei das elektrische Schaltmittel innerhalb eines Jochs und/oder angrenzend an einem Luftspalt zwischen einem Kern des Elektromagneten und dem beweglichen Magnetanker angeordnet ist.

Für den Fall, dass das elektrische Schaltmittel in Abhängigkeit eines vom Elektromagneten erzeugten magnetischen Feldes schaltet, ist eine Anordnung des elektrischen Schaltmittels innerhalb des Jochs bzw. direkt angrenzend an den Luftspalt besonders vorteilhaft, da hier die Änderungen des Magnetfeldes am besten zu detektieren sind. Dadurch wird vorteilhafterweise eine hohe Zuverlässigkeit beim Schalten von einem Bestromungszustand in einen anderen Bestromungszustand erreicht.

In einer Weiterbildung der Erfindung ist mindestens ein elektrisches Schaltmittel ein mechanischer Schalter, welcher den Bestromungszustand des Elektromagneten in Abhängigkeit einer Position des Magnetankers oder einer Position eines Ventilkolbens eines von dem Magnetventil gesteuerten Ventils umschaltet. Dadurch ist der Elektromagnet direkt durch die Lage bzw. Position des Magnetankers oder einer Position eines Ventilkolbens eines von dem Magnetventil gesteuerten Ventils von einem Bestromungszustand in einen anderen Bestromungszustand schaltbar. Es sind keine zusätzlichen Zeitgeber oder ein schaltungstechnischer Aufwand einer Steuerelektronik notwendig. Dadurch lässt sich vorteilhafterweise ein energiesparender Betrieb des Magnetventils ermöglichen, ohne aufwändige Schaltungselektronik.

Gemäß einer Weiterbildung der Erfindung sind die Bestromungszustände des Elektromagneten mittels mindestens eines elektrischen Schaltmittels zusammen mit mindestens einem weiteren elektronischen Bauelements, insbesondere mindestens eines Transistors, oder eines durch elektrischen Strom betriebenen Schalters, insbesondere eines Relais, umschaltbar. Dadurch kann das Schalten des Elektromagneten von einem Bestromungszustand in einen anderen Bestromungszustand mit nur einem elektrischen Schaltelement, z.B. einem Reed-Schalter oder Hall-Sensor, erfolgen. Es ist beispielsweise möglich einen einfachen Normally Open Reed-Schalter innerhalb des von dem Elektromagneten erzeugten Magnetfeldes anzuordnen und dessen Funktion vorteilhafterweise mittels eines zusätzlichen Elements zu invertieren, zu verdoppeln und/oder zu verstärken.

Eine Weiterbildung der Erfindung sieht ein Magnetventil mit einem C-förmigen Joch mit einer Flussführung zum Führen des magnetischen Flusses vor. Das Joch bildet den magnetischen Rückschluss, wobei das Joch und die Flussführung vorteilhafterweise das magnetische Feld bündeln. Ein elektrisches Schaltmittel, welches den Bestromungszustand des Elektromagneten in Abhängigkeit des magnetischen Feldes wechselt, kann derart in das Joch bzw. zwischen die Flussführung eingebracht werden kann, dass sich vorteilhafterweise die Zuverlässigkeit der Schaltfunktion erhöht.

In einer Weiterbildung der Erfindung ist das elektrische Schaltmittel an einem Leitungsträger, insbesondere einem Leadframe oder einer Leiterplatte, angeordnet, wobei mittels des Leitungsträgers eine Stromversorgung des Elektromagneten bereitstellbar ist. Der Leitungsträger ist ein lötbarer bzw. schweißbarer metallischer Rahmen und zur maschinellen Herstellung von elektronischen Komponenten geeignet. Die einzelnen Kontakte sind zunächst miteinander verbunden und können nach einer mechanischen Fixierung voneinander getrennt werden. Da ein derartiger Leitungsträger zum Anschluss der Spule bzw. der Teilspulen des Elektromagneten innerhalb des Gehäuses des Magnetventils angeordnet ist, lassen sich die Kontakte besonders einfach mit dem elektrischen Schaltmittel verbinden. Dadurch brauchen vorteilhafterweise keine weiteren Anschlussmöglichkeiten für das elektrische Schaltmittel geschaffen werden.

Gemäß einer Weiterbildung der Erfindung weist das Magnetventil eine pneumatische Vorratsdruckleitung mit einer Leitungsverzweigung auf, wobei die pneumatische Vorratsdruckleitung derart ausgestaltet ist, um den pneumatischen Vorratsdruck dem Magnetventil und mindestens einem weiteren mit dem Magnetventil verbundenen Ventil bereitzustellen. Durch die Leitungsverzweigung der pneumatischen Vorratsdruckleitung ist das Magnetventil vorteilhafterweise flexibel einsetzbar. Es lassen sich somit mehrere Magnetventile platzsparend zu einem Ventilmodul zusammensetzen, ohne auf verschiedene Ausführungsformen des Magnetventils zurückgreifen zu müssen. Bei der erfindungsgemäßen Ausgestaltung der pneumatischen Vorratsdruckleitung kann der jeweils nicht benötigte Leitungsabschnitt abgedichtet werden, um einen modularen Aufbau zu ermöglichen.

Bei dem erfindungsgemäßen Magnetventil können mindestens zwei, drei oder mehr der vorstehend beschriebenen Weiterbildungen miteinander kombiniert werden, um im Rahmen der Erfindung sinnvolle Merkmalskombinationen zu erhalten.

Ferner wird die o.g. Aufgabe mittels einer Ventileinrichtung gelöst, wobei die Ventileinrichtung ein Hauptventil und mindestens ein Steuerventil aufweist. Das mindestens eine Steuerventil ist zum Ansteuern des Hauptventils geeignet und als ein vorstehend beschriebenes Magnetventil ausgeführt. Durch die Verwendung eines vorgesteuerten Hauptventils kann vorteilhafterweise ein höherer Durchfluss eines Druckmittels erzielt werden.

Durch die Verwendung von standardisierten Schnittstellen des Magnetventils sowie die modulare Aufbauweise aus Hauptventil und Steuerventil kann die erfindungsgemäße Ventileinrichtung vorteilhafterweise in verschiedenen Leistungsstufen hinsichtlich Durchfluss- und Druckbereich erstellt werden.

Gemäß einer Weiterbildung der Erfindung ist das Hauptventil ein Relaisventil. Bei dieser Ausgestaltung der erfindungsgemäßen Ventileinrichtung sind das Relaisventil und das Magnetventil in einem gemeinsamen Ventilgehäuse angeordnet.

Dabei sind das Relaisventil als Teil einer Pneumatikbaugruppe in einem ersten Gehäuseteil der Ventileinrichtung und der Elektromagnet bzw. die Spule des Elektromagneten des Magnetventils (2) als Teil einer Spulenbaugruppe in einem zweiten Gehäuseteil der Ventileinrichtung angeordnet. In dem ersten Gehäuseteil der Ventileinrichtung ist im Wesentlichen der pneumatische Teil der Ventileinrichtung angeordnet, insbesondere die Anschlüsse der pneumatischen Druckleitungen und das Relaisventil. In dem zweiten Gehäuseteil der Ventileinrichtung befindet sich im Wesentlichen der elektrische Teil der Ventileinrichtung, wie z.B. das elektrische Schaltmittel, die elektrischen Anschlussleitungen sowie die Spule des Elektromagneten. Das Ventilgehäuse der Ventileinrichtung wird durch den ersten Gehäuseteil der Pneumatikbaugruppe und dem zweiten Gehäuseteil der Spulenbaugruppe gebildet, wobei das erste Gehäuseteil durch das zweite Gehäuseteil verschlossen wird.

Ein Relaisventil arbeitet als luftmengenverstärkendes Ventil, indem das Relaisventil mit verhältnismäßig kleinen Druckluftmengen verhältnismäßig große Druckluftmengen, z.B. für die Bremszylinder einer Druckluftbremsanlage eines Fahrzeugs, steuert. Dazu weist das Relaisventil einen mit einer Druckmittelquelle verbindbaren Druckmitteleingang, wenigstens einen mit einem Verbraucher verbindbaren Druckmittelausgang, einen Steuereingang sowie wenigstens eine zur Atmosphäre führende Entlüftung auf.

Üblicherweise sind neben dem Relaisventil weitere Komponenten, wie z.B. eine Vorsteuereinheit, in einer Ventileinrichtung integriert. Bei einer Kombination des erfindungsgemäßen Magnetventils und eines Relaisventils in einer Ventileinrichtung kann die baulichen Abmessungen der Ventileinrichtung vorteilhafterweise möglichst gering gehalten werden, da das Magnetventil aufgrund der energiesparenden Funktion an sich eine kompakte Bauform aufweist und zudem eine separate Steuereinheit zum Umsetzen dieser energiesparenden Funktion nicht benötigt wird.

In einer Weiterbildung der Erfindung ist das elektrische Schaltmittel derart ausgestaltet, um den Bestromungszustand des Elektromagneten in Abhängigkeit einer Position eines Relaisventilkolbens des Relaisventils oder in Abhängigkeit eines Druckes in einem Druckraum des Relaisventils umzuschalten. Wird der Bestromungszustand des Elektromagneten in Abhängigkeit einer Position eines Relaisventilkolbens des Relaisventils geschaltet, ist das elektrische Schaltmittel bevorzugt als ein mechanischer Schalter ausgebildet, welcher mit dem Leadframe des Magnetventils elektrisch verbunden ist. Wird der Bestromungszustand des Elektromagneten jedoch in Abhängigkeit eines Druckes in einem Druckraum des Relaisventils geschaltet, ist das elektrische Schaltmittel bevorzugt als Drucksensor ausgebildet und innerhalb des Druckraumes des Relaisventils angeordnet, um den Druck eines Druckmittels innerhalb des Druckraumes zu erfassen.

Damit keine Undichtigkeiten über das Leadframe oder die elektrischen Leitungen entstehen, ist der mechanische Schalter vorzugsweise innerhalb eines drucklosen Raumes angeordnet, wobei dieser Raum eine direkte Verbindung zu einer Entlüftung der Ventileinrichtung aufweist.

Über den Steuereingang wird der Relaisventilkolben in Abhängigkeit des an dem Steuereingang anliegenden Steuerdruckes gegen die Kraft einer Feder bewegt, um das Ventil zu öffnen. Der an dem Steuereingang anliegende Steuerdruck wird dabei von dem mit dem Relaisventil verbundenen Magnetventil bereitgestellt.

Ist das Relaisventil vollständig geöffnet, wird durch die Bewegung des Relaisventilkolbens der mechanische Schalter betätigt, welcher den Bestromungszustand des Elektromagneten des verbundenen Magnetventils umschaltet, so dass das Magnetventil von einer Anzugsphase in eine Haltephase wechselt, bei der im zweiten Bestromungszustand wesentlich weniger Strom zum Halten des Magnetankers benötigt wird.

Die Anordnung des mechanischen Schalters innerhalb des Gehäuses der Ventileinrichtung sowie die Ausgestaltung des erfindungsgemäßen Magnetventils, insbesondere ohne separate Steuereinrichtung, ermöglicht vorteilhafterweise den modularen Aufbau der Ventileinrichtung, bei der auf fertige Komponenten mit standardisierten Schnittstellen zurückgegriffen werden kann. Zudem weist die erfindungsgemäße Ventileinrichtung aufgrund des energiesparenden Magnetventils einen effizienten Betrieb bei kompakter Bauform auf.

Bei der erfindungsgemäßen Ventileinrichtung können zwei oder drei der vorstehend beschriebenen Weiterbildungen miteinander kombiniert werden, um im Rahmen der Erfindung sinnvolle Merkmalskombinationen zu erhalten.

Schließlich betrifft die Erfindung die Verwendung eines Magnetventils, z.B. als Steuerventil eines Hauptventils, für eine Druckluftanlage in einem Fahrzeug, insbesondere eine Druckluftbremsanlage in einem Lastkraftwagen oder Anhänger. Dabei ist das Magnetventil erfindungsgemäß ausgebildet und kann in einer Ventileinrichtung eingesetzt werden.
Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Darstellung eines erfindungsgemäßen Magnetventils,
- Fig. 2: eine schematische Darstellung eines erfindungsgemäßen Magnetventils mit einem C-förmigen Joch mit einer Flussführung,
- Fig. 3: eine schematische Darstellung eines erfindungsgemäßen Magnetventils mit alternativen Anordnung des elektrischen Schaltmittels,
- Fig. 4: eine elektrische Schaltung eines Bestromungszustandes des Elektromagneten mit parallel geschalteten Teilspulen,
- Fig. 5: eine elektrische Schaltung eines Bestromungszustandes des Elektromagneten mit in Reihe geschalteten Teilspulen,
- Fig. 6: eine alternative elektrische Schaltung eines Bestromungszustandes des Elektromagneten mit parallel geschalteten Teilspulen,
- Fig. 7: eine alternative elektrische Schaltung eines Bestromungszustandes des Elektromagneten mit in Reihe geschalteten Teilspulen,
- Fig. 8: eine alternative elektrische Schaltung eines Bestromungszustandes des Elektromagneten mit einem Reed-Schalter und Transistoren,
- Fig. 9: eine alternative elektrische Schaltung eines Bestromungszustandes des Elektromagneten mit einem Hall-Sensor und Transistoren,
- Fig. 10: eine alternative elektrische Schaltung eines Bestromungszustandes des Elektromagneten mit einer überbrückten einer Teilspule,
- Fig. 11: eine alternative elektrische Schaltung eines Bestromungszustandes des Elektromagneten mit in Reihe geschalteten Teilspulen,
- Fig. 12: eine alternative elektrische Schaltung eines Bestromungszustandes des Elektromagneten mit vorgeschaltetem Widerstand und
- Fig. 13: eine erfindungsgemäße Ventileinheit mit Hauptventil und Steuerventil.

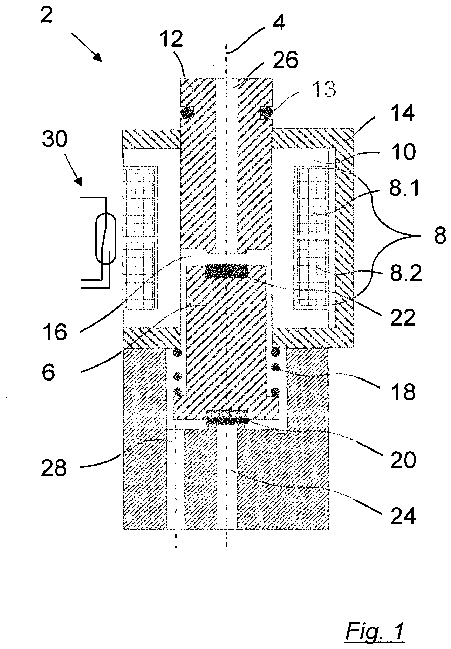

Fig. 1 zeigt eine schematische Darstellung eines erfindungsgemäßen Magnetventils 2. Es handelt sich hierbei bevorzugt um ein optimiertes elektropneumatisches Hochleistungsventil mit einer Verbesserung der Umsetzung der elektromagnetischen Leistung in mechanische Ausgangsleistung.

Die Umsetzung der elektromagnetischen Leistung in mechanische Ausgangsleistung erfolgt dabei mittels eines Elektromagneten mit einem entlang einer Spulenlängsachse 4 beweglich angeordneten Magnetanker 6. Zu diesem Elektromagneten gehören ferner eine Spule 8 mit einem Spulenkörper 10 und ein in Bezug zum Magnetanker 6 unbeweglicher Kern 12, welcher mittels eines Dichtrings 13 gegen ein hier nicht dargestelltes Gehäuse abgedichtet ist.

Im Falle einer Bestromung der Spule 8 wird ein magnetisches Feld erzeugt, wobei die magnetische Felddichte im Innern der Spule 8 am größten ist. Der magnetische Fluss verläuft dabei in einem geschlossenen Umlauf, wobei der wesentliche Teil des magnetischen Flusses durch einen Eisenkreis verläuft, welcher aus einem Joch 14 aus ferromagnetischem Material, dem unbeweglichen Kern 12 und dem beweglichen Magnetanker 6 gebildet wird. Der magnetische Widerstand im Magnetkreis ist dabei umso größer, je größer der Abstand, d.h. ein Luftspalt 16, zwischen dem Kern 12 und dem Magnetanker 6 ist. Im Bestreben den magnetischen Widerstand zu verringern, wird der Magnetanker 6 in Richtung Kern 12 bewegt, wobei die Bewegung des Magnetankers 6 gegen die Kraft einer Rückstellfeder 18 erfolgt.

In dem Magnetanker 6 sind zwei Elastomereinsätze 20, 22 als jeweils ein Ventilsitz angeordnet. Ein Elastomereinsatz 20 verschließt in der Ruheposition des Magnetankers 6 eine pneumatische Vorratsdruckleitung 24 und ein weiterer Elastomereinsatz 22 verschließt im angezogenen Zustand des Magnetankers 6 eine zur Atmosphäre führende Entlüftungsleitung 26. Gleichzeitig ist im angezogenen Zustand des Magnetankers 6 das Ventil zur Vorratsdruckleitung 24 geöffnet und der anliegende Vorratsdruck wird über eine Steuerdruckleitung 28 aus dem Magnetventil 2 herausgeführt.

Sobald die Spule 8 nicht mehr bestromt wird, drückt die Rückstellfeder 18 den Magnetanker 6 wieder zurück in seine Ruheposition.

Um den Magnetanker 6 gegen die Kraft der Rückstellfeder 18 von seiner Ruheposition heraus in Richtung Kern 12 zu bewegen, ist zunächst ein relativ hoher Anzugsstrom des Elektromagneten notwendig.

In einer anschließenden Haltephase, bei der der Magnetanker 6 lediglich gehalten werden muss, ist ein geringerer Haltestrom zum Betreiben des Elektromagneten ausreichend, da auch nur ein geringerer magnetischer Fluss als während der Anzugsphase benötigt wird.

Daher lässt sich die Wirtschaftlichkeit des Magnetventils 2 vorteilhafterweise erhöhen, indem die Spule 8 des Elektromagneten in zwei Teilspulen 8.1, 8.2 aufgeteilt wird und diese Teilspulen 8.1, 8.2 derart geschaltet werden, dass sich an dem Elektromagneten unterschiedliche Bestromungszustände einstellen, bei denen jeweils ein anderer Strom durch den Elektromagneten fließt. Die Teilspulen 8.1, 8.2 sind axial nebeneinander auf einem vorzugsweise einstückigen Spulenkörper 10 angeordnet und gehören zu demselben Magnetkreis, wobei die wesentlichen ferromagnetischen Elemente des Magnetkreises der Kern 12, der Magnetanker 6 und das Joch 14 sind.

Erfindungsgemäß ist mindestens ein elektrisches Schaltmittel 30 vorgesehen, welches derart ausgestaltet ist, um den Elektromagneten von einem Bestromungszustand in einen anderen Bestromungszustand zu schalten. Gemäß Fig. 1 ist das elektrische Schaltmittel 30 ein Reed-Schalter, welcher in Abhängigkeit des von dem Elektromagneten erzeugten Magnetfeldes seinen Schaltzustand ändert.

Die Erfindung ist jedoch nicht auf das Ausführungsbeispiel mit zwei Teilspulen 8.1, 8.2 beschränkt. Vielmehr können auch mehr als zwei Teilspulen 8.1, 8.2 vorgesehen sein, welche unterschiedliche Erregerwicklungen mit verschiedenen Windungszahlen, Drahtdurchmessern usw. aufweisen können. Abhängig von dem geforderten elektrischen und magnetischen Leistungsverhalten des Elektromagneten sind diese Teilspulen 8.1, 8.2 dann unterschiedlich verschaltet.

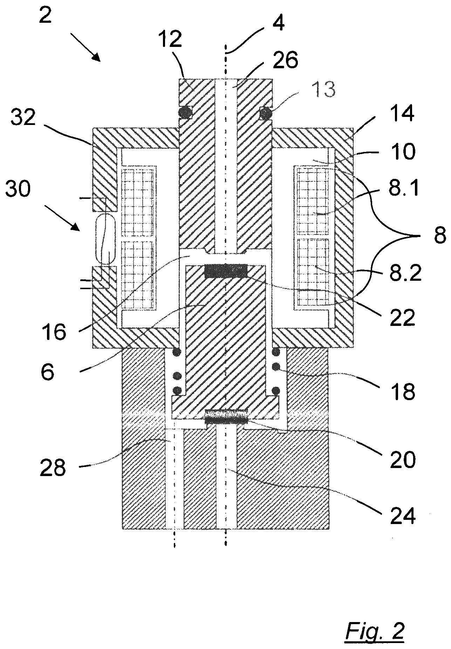

Fig. 2 zeigt eine schematische Darstellung eines erfindungsgemäßen Magnetventils 2 mit einem C-förmigen Joch 14 mit einer Flussführung 32. Das Joch 14 dient dazu den magnetischen Fluss zu bündeln. Wird das elektrische Schaltmittel 30 innerhalb der Flussführung 32 angeordnet, wie es in Fig. 2 angedeutet ist, wird das elektrische Schaltmittel 30 von einem konzentrierten Magnetfeld erfasst. Für den Fall, dass das elektrische Schaltmittel 30 in Abhängigkeit des vom Elektromagneten erzeugten magnetischen Feldes den Bestromungszustand des Elektromagneten schaltet, erfolgt dies schneller und zuverlässiger aufgrund der in Fig. 2 dargestellten Flussführung 32 des Jochs 14.

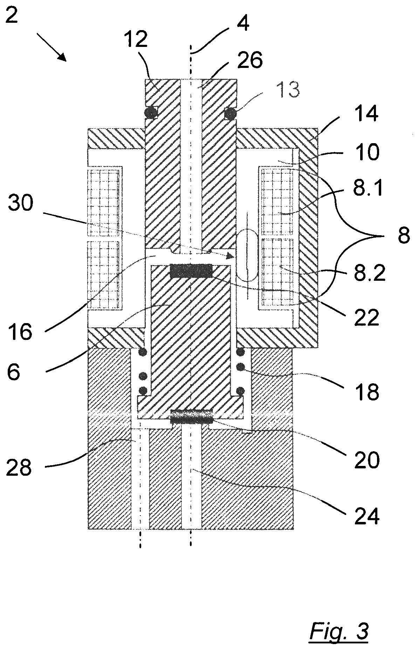

Fig. 3 zeigt eine alternative Anordnung des elektrischen Schaltmittels 30 für den Fall, dass das elektrische Schaltmittel 30 in Abhängigkeit des vom Elektromagneten erzeugten magnetischen Feldes den Bestromungszustand des Elektromagneten schaltet. Alternativ zu Fig. 2 ist es möglich das elektrische Schaltmittel 30, insbesondere den Reed-Schalter, parallel zum Luftspalt 16, bevorzugt unmittelbar angrenzend an diesen Luftspalt 16, anzuordnen. Wird der Elektromagnet erregt bzw. bestromt, fließt der magnetische Fluss durch den Luftspalt 16, wobei ein bestimmter Anteil des magnetischen Flusses auch durch den Reed-Schalter 30 verläuft. In diesem Fall sind die Teilspulen 8.1, 8.2 parallel geschaltet.

Wenn der Luftspalt 16 aufgrund der Bewegung des Magnetankers 6 geschlossen ist, verläuft der gesamte magnetische Fluss durch den Kern 12 und den Magnetanker 6 und nicht länger durch den Reed-Schalter 30. Daher wechselt der Reed-Schalter 30 den Schaltzustand, wodurch die Teilspulen 8.1; 8.2 in Reihe geschaltet werden, um den Elektromagneten in einen energiesparenden Bestromungszustand zu schalten. In dieser Ausführungsform weist der Reed-Schalter 30 im Vergleich zu der in Fig. 2 dargestellten Ausführungsform ein invertiertes Schaltverhalten auf.

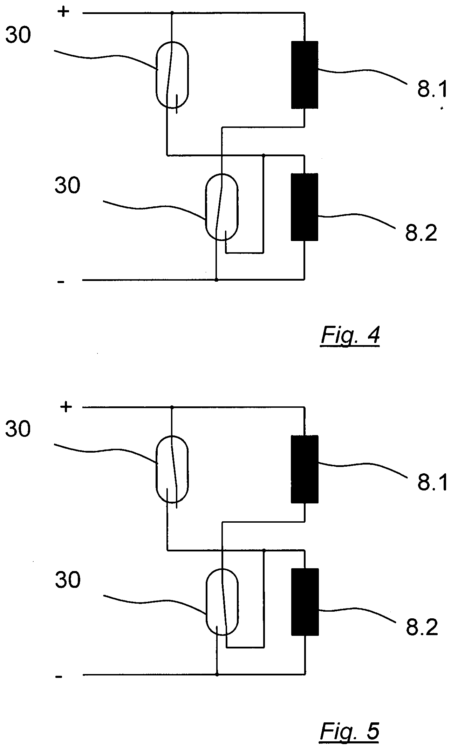

Fig. 4 und Fig. 5 zeigen jeweils eine elektrische Schaltung eines Bestromungszustandes des Elektromagneten. Fig. 4 stellt die Anzugsphase dar. Wenn der Elektromagnet ausgeschaltet ist, d.h. sich in einem stromlosen Zustand befindet, dann befindet sich der Reed-Schalter 30 in der in Fig. 4 dargestellten Position. Beide Teilspulen 8.1, 8.2 sind in diesem Fall für einen schnellen Anstieg des Magnetfeldes parallel geschaltet.

Wenn der Elektromagnet erregt wird, dann fließt ein hoher Anzugsstrom durch den Elektromagneten und der Magnetanker 6 wird in Richtung des Kerns 12 angezogen, wodurch sich der Luftspalt 16 zwischen Magnetanker 6 und Kern 12 schließt.

Fig. 5 stellt die Haltephase dar, bei der der Magnetanker 6 in seiner angezogenen Position gehalten wird. Wenn der Luftspalt 16 geschlossen ist, ist der magnetische Fluss durch den Reed-Schalter 30 groß genug, um diesen zu schalten. Dann sind die Teilspulen 8.1, 8.2 in Reihe geschaltet und der Strom durch den Elektromagneten verringert sich.

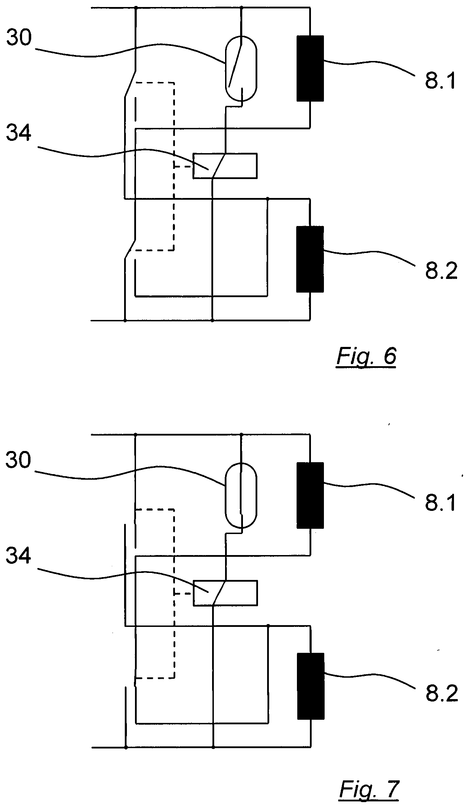

Fig. 6 und Fig. 7 zeigen jeweils eine alternative elektrische Schaltung eines Bestromungszustandes des Elektromagneten. Gemäß dieser alternativen Ausführungsform ist es möglich einen einfachen Schließer (Normally Open Reed-Schalter) als elektrisches Schaltmittel 30 mit einem nachgeschalteten Relais 34 zu verwenden.

Ist in der Anzugsphase der Reed-Schalter 30 gemäß Fig. 6 geöffnet, sind die Teilspulen 8.1,8.2 des Elektromagneten parallel geschaltet und der Elektromagnet befindet sich in einem ersten Bestromungszustand. Bei angezogenem Magnetanker 6 ändert sich das Magnetfeld derart, dass der Reed-Schalter 30 schließt, wie es in Fig. 7 dargestellt ist. Das Schließen des Reed-Schalters 30 bewirkt ein Schalten des nachgeschalteten Relais 34, wodurch die Teilspulen 8.1, 8.2 des Elektromagneten in Reihe geschaltet sind und den Elektromagneten in einen zweiten Bestromungszustand schalten.

Diese alternative, in Fig. 6 und Fig. 7 dargestellten elektrischen Schaltungen haben den Vorteil, dass nur ein einfaches elektrisches Schaltmittel 30 benötigt wird, welches innerhalb des magnetischen Feldes angeordnet wird. Das ist insbesondere dann vorteilhaft, wenn aus Platzgründen nur ein Schaltmittel 30 in dem Magnetventil 2 angeordnet werden kann.

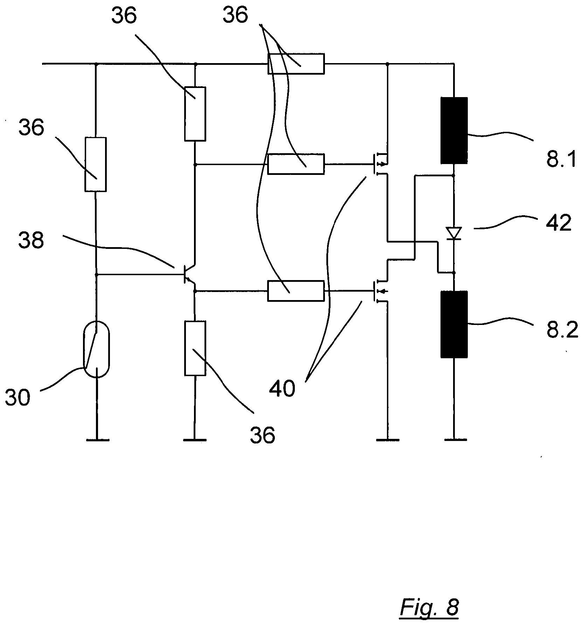

Fig. 8 zeigt eine alternative elektrische Schaltung zum schalten des Bestromungszustandes des Elektromagneten mit nur einem Reed-Schalter 30. Neben mehreren Widerständen 36 weist diese Schaltung einen Bipolartransistor 38, zwei Feldeffekttransistoren 40 und eine Diode 42 auf. In Abhängigkeit der Schalterstellung des Reed-Schalters 30 wird der Bipolartransistor 38 angesteuert und die Teilspulen 8.1, 8.2 entweder in Reihe oder parallel geschaltet, um zwischen zwei verschieden Bestromungszustände des Elektromagneten hin und her zu schalten. Auch in dieser Ausführungsform können die einfachen Bauelemente, wie Widerstände 36, Bipolartransistor 38, Feldeffekttransistoren 40, Diode 42, separat angeordnet sein und nur der Reed-Schalter 30 innerhalb des von dem Elektromagneten erzeugten Magnetfeld angeordnet sein. Durch die Verwendung von nur einem elektrischen Schaltmittel 30 können Platz und Kosten gespart werden.

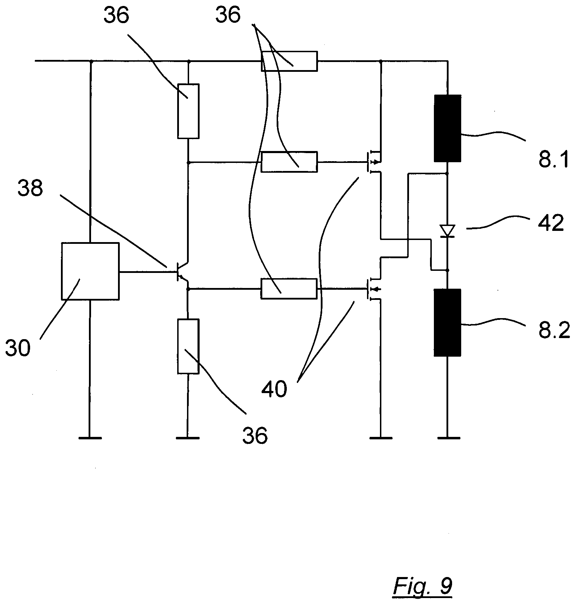

Fig. 9 zeigt ebenfalls eine alternative elektrische Schaltung zur Herstellung eines Bestromungszustandes des Elektromagneten. In Abhängigkeit der Schalterstellung des elektrischen Schaltmittels 30 wird der Bipolartransistor 38 angesteuert und die Teilspulen 8.1, 8.2 entweder in Reihe oder parallel geschaltet, um zwischen zwei verschieden Bestromungszustände des Elektromagneten hin und her zu schalten. Im vergleich zu dem in Fig. 8 dargestellten Ausführungsbeispiel ist das elektrische Schaltmittel 30 ein Hall-Sensor 30, welcher den Hall-Effekt zur Messung von Magnetfeldern ausnutzt und somit den Bestromungszustand des Elektromagneten in Abhängigkeit des erzeugten Magnetfeldes wechselt.

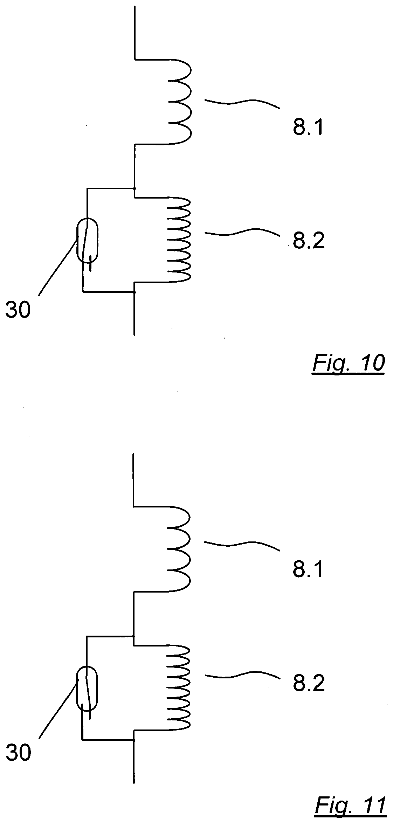

Fig. 10 und Fig. 11 zeigen jeweils ein elektrisches Schaltbild zur Darstellung von zwei verschiedenen Bestromungszuständen des Elektromagneten. Dabei ist in Fig. 10 ein erster Bestromungszustand dargestellt, bei dem mittels eines elektrischen Schaltmittels 30 eine Teilspule 8.2 überbrückt ist. Dabei muss die zweite Teilspule 8.1 derart dimensioniert sein, um eine ausreichende magnetische Kraft zu erzeugen, die den Magnetanker 6 gegen die Kraft der Rückstellfeder 18 bewegen kann, wenn der Elektromagnet bestromt wird. Das in Fig. 10 dargestellte elektrische Schaltbild entspricht daher der Anzugsphase.

Das in Fig. 11 dargestellte elektrische Schaltbild beschreibt den Bestromungszustand während der Haltephase des Magnetankers 6. Das elektrische Schaltmittel 30 ist gemäß Fig. 11 geöffnet, so dass die Teilspulen 8.1, 8.2 in Reihe geschaltet sind und somit ein geringerer Strom durch den Elektromagneten fließt als während der Anzugsphase. Da in diesem Ausführungsbeispiel die gesamte magnetische Kraft während der Anzugsphase von nur einer Teilspule 8.1 bereitgestellt wird, ist eine derartige Ausführungsform weniger effektiv als die Verwendung von zwei parallel geschalteten Teilspulen 8.1, 8.2. Dennoch arbeitet ein derart ausgestaltetes Magnetventil energiesparend durch die Reihenschaltung der Teilspulen 8.1, 8.2 während der Haltephase. Ferner wird für die Umsetzung dieser Ausgestaltung lediglich ein elektrisches Schaltmittel 30 benötigt.

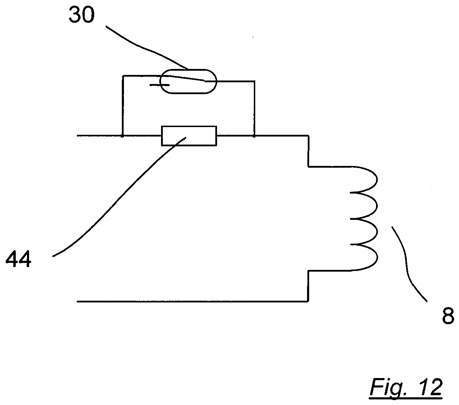

Fig. 12 zeigt eine alternative elektrische Schaltung eines Bestromungszustandes des Elektromagneten mit vorgeschaltetem Widerstand 44. Das elektrische Schaltmittel 30 dient dabei zur Überbrückung des vorgeschalteten Widerstandes 44. In einer Anzugsphase wird dem Elektromagneten ein ausreichend großer Anzugsstrom bereitgestellt, um den Magnetanker 6 zu bewegen. Das elektrische Schaltmittel 30'ist dabei derart geschaltet, um den vorgeschalteten Widerstand 44 zu überbrücken. Ist der Magnetanker 6 angezogen, schaltet das elektrische Schaltmittel 30 und der Elektromagnet wechselt aufgrund des vorgeschalteten Widerstandes 44 den Bestromungszustand. Durch den vorgeschalteten Widerstand 44 fließt ein geringerer Strom durch den Elektromagneten, wodurch die Verluste und Eigenerwärmung des Elektromagneten reduziert werden. Die Dimensionierung des vorgeschalteten Widerstandes 44 richtet sich dabei nach dem Widerstand der Erregerwicklung der Spule des Elektromagneten.

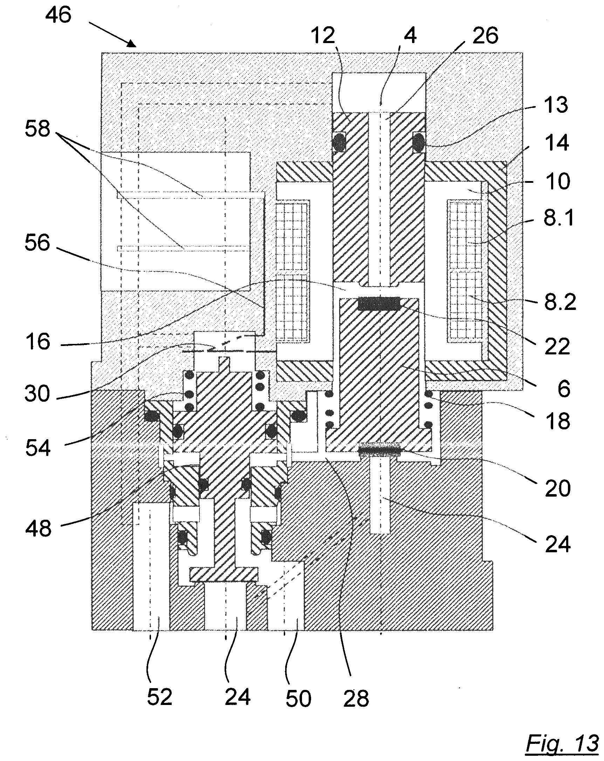

Fig. 13 zeigt eine erfindungsgemäße Ventileinrichtung 46 mit Hauptventil und Steuerventil, wobei das Hauptventil ein Relaisventil und das Steuerventil ein erfindungsgemäßes, vorstehend beschriebenes Magnetventil 2 ist.

In der in Fig. 13 dargestellten Ausführungsform der Erfindung werden die Bestromungszustände des Elektromagneten des Magnetventils 2 in Abhängigkeit eines von dem Magnetventil 2 gesteuerten Relaisventilkolbens 48 geschaltet.

Um als luftmengenverstärkendes Ventil zu arbeiten, ist das Relaisventil über die pneumatische Vorratsdruckleitung 24 mit einer hier nicht dargestellten Druckmittelquelle verbunden. Ferner weist das Relaisventil einen mit einem Verbraucher verbindbaren Druckmittelausgang 50 sowie eine zur Atmosphäre führende Entlüftung 52 auf.

Über die Steuerdruckleitung 28 des Magnetventils 2 wird der Relaisventilkolben 48 in Abhängigkeit des anliegenden Steuerdruckes gegen die Kraft einer Rückstellfeder 54 bewegt, um das Relaisventil zu öffnen.

Durch die Bewegung des Relaisventilkolbens 48 wird ein elektrisches Schaltmittel 30 betätigt, welches in diesem Fall als mechanischer Schalter 30 ausgebildet ist. Dabei ist der mechanische Schalter 30 bevorzugt an dem Leitungsträger 56 bzw. Leadframe angeordnet und somit mit den elektrischen Leitungen 58 verbunden, die auch mit den Teilspulen 8.1, 8.2 verbunden sind. Dazu wird oberhalb des Relaisventilkolbens 48 ein Raum in dem Ventilgehäuse geschaffen, welcher mit der Entlüftung 52 des Ventils verbunden ist und somit den Atmosphärendruck aufweist. Dadurch kann kein Druckmittel über den mechanischen Schalter 30 und die Steckverbindung und/oder Leitungen über das Leadframe 56 entweichen.

Das erfindungsgemäße Magnetventil 2 sowie die erfindungsgemäße Ventileinrichtung 46 sind besonders in Bezug auf ihre Abmessungen, Gewicht, Herstellungskosten und/oder Leistungen gegenüber einem entsprechenden Magnetventil oder Ventileinrichtung gemäß dem Stand der Technik verbessert.

Die Modularität des Magnetventils 2 erlaubt es, das Magnetventil 2 sowohl als alleinstehendes Ventil als auch als Steuerventil für Motor- und Getriebeeinrichtungen mit gemeinsamen Schnittstellen einzusetzen, denn durch die standardisierten Schnittstellen des Magnetventils 2 ist dieses vorteilhafterweise besonders einbaukompatibel.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Magnetventil (2)
mit einem Elektromagneten, wobei der Elektromagnet einen beweglich angeordneten Magnetanker (6) aufweist, mit mindestens zwei voneinander verschiedenen Bestromungszuständen des Elektromagneten und mit mindestens einem elektrischen Schaltmittel (30), welches derart ausgestaltet ist, um den Elektromagneten von einem Bestromungszustand in einen anderen Bestromungszustand umzuschalten, wobei die verschiedenen Bestromungszustände des Elektromagneten durch unterschiedliche Stromstärken des durch den Elektromagneten fließenden Stromes **gekennzeichnet sind,**
**dadurch** gekennzeichnet, dass
das mindestens eine elektrische Schaltmittel (30)
- in Abhängigkeit eines vom Elektromagneten erzeugten magnetischen Feldes oder
- in Abhängigkeit einer Position des Magnetankers (6) den Bestromungszustand des Elektromagneten automatisch umschaltet
oder
dass mittels des elektrischen Schaltmittels (30) der Bestromungszustand des Elektromagneten in Abhängigkeit einer Position eines Ventilkolbens (48) eines von dem Magnetventil (2) steuerbaren Ventils automatisch umschaltbar ist.

2. Magnetventil nach Anspruch 1,
**dadurch gekennzeichnet, dass**
der Elektromagnet mindestens zwei oder mehr Teilspulen (8.1, 8.2) aufweist und
zum Herstellen eines ersten Bestromungszustandes die Teilspulen (8.1, 8.2) mittels des mindestens einen elektrischen Schaltmittels (30) parallel geschaltet sind oder mindestens eine Teilspule (8.2) überbrückt ist und zum Herstellen eines zweiten Bestromungszustandes die Teilspulen (8.1, 8.2) mittels des mindestens einen elektrischen Schaltmittels (30) in Reihe geschaltet sind.

3. Magnetventil nach Anspruch 1 oder 2,
**dadurch gekennzeichnet, dass**
mindestens ein elektrisches Schaltmittel (30) ein Reed-Schalter ist.

4. Magnetventil nach Anspruch 1 oder 2,
**dadurch gekennzeichnet, dass**
mindestens ein elektrisches Schaltmittel (30) ein Hall-Sensor ist.

5. Magnetventil nach einem der vorhergehenden Ansprüche,
**dadurch gekennzeichnet, dass**
das elektrische Schaltmittel (30) innerhalb eines durch den Elektromagneten erzeugten magnetischen Feldes angeordnet ist, wobei das elektrische Schaltmittel (30) innerhalb eines Jochs (14) und/oder angrenzend an einem Luftspalt (16) zwischen einem Kern (12) und dem beweglichen Magnetanker (6) anordenbar ist.

6. Magnetventil nach Anspruch 1 oder 2,
**dadurch gekennzeichnet, dass**
mindestens ein elektrisches Schaltmittel (30) ein mechanischer Schalter ist.

7. Magnetventil nach einem der vorhergehenden Ansprüche,
**dadurch gekennzeichnet, dass**
die Bestromungszustände des Elektromagneten mittels des elektrischen Schaltmittels (30) zusammen mit mindestens einem weiteren elektronischen Bauelement oder mittels eines durch elektrischen Strom betriebenen Schalters umschaltbar sind.

8. Magnetventil nach einem der vorhergehenden Ansprüche,
**dadurch gekennzeichnet, dass**
das Magnetventil (2) ein C-förmiges Joch (14) mit einer Flussführung (32) zum Führen des magnetischen Feldes aufweist.

9. Magnetventil nach einem der vorhergehenden Ansprüche,
**dadurch gekennzeichnet, dass**
das elektrische Schaltmittel (30) an einem elektrischen Leitungsträger (56) anordenbar ist, wobei mittels des Leitungsträgers (56) eine Stromversorgung des Elektromagneten bereitstellbar ist.

10. Ventileinrichtung mit einem Hauptventil und mindestens einem Steuerventil, welches derart ausgestaltet ist, um das Hauptventil anzusteuern,
**dadurch gekennzeichnet, dass**
das Steuerventil ein Magnetventil (2) nach einem der Ansprüche 1 bis 9 ist.

11. Ventileinrichtung nach Anspruch 10,
**gekennzeichnet durch**
eine pneumatische Vorratsdruckleitung (24) mit einer Leitungsverzweigung, welche derart ausgestaltet ist, um den pneumatischen Vorratsdruck dem Magnetventil (2) und mindestens einem weiteren mit dem Magnetventil (2) verbundenem Ventil bereitzustellen.

12. Ventileinrichtung nach Anspruch 11,
**dadurch gekennzeichnet, dass**
das Hauptventil ein Relaisventil ist und
das Relaisventil in einem ersten Gehäuseteil der Ventileinrichtung und der Elektromagnet des Magnetventils (2) in einem zweiten Gehäuseteil angeordnet sind, wobei der erste Gehäuseteil durch den zweiten Gehäuseteil verschließbar ist.

13. Ventileinrichtung nach Anspruch 12,
**dadurch gekennzeichnet, dass**
das elektrische Schaltmittel (30) derart ausgestaltet ist, um den Bestromungszustand des Elektromagneten in Abhängigkeit einer vorbestimmten Position eines Relaisventilkolbens (48) des Relaisventils oder in Abhängigkeit eines Druckes in einem Druckraum des Relaisventils umzuschalten.

14. Wenigstens ein Magnetventil (2) nach einem der Ansprüche 1 bis 9 und/oder wenigstens eine Ventileinrichtung (46) nach einem der Ansprüche 10 bis 13, wobei das wenigstens eine Magnetventil und/oder die wenigstens eine Ventileinrichtung in einer Druckluftanlage eines Fahrzeugs einsetzbar ist oder sind.

15. Verfahren zum Betreiben eines Magnetventils (2) mit einem Elektromagneten, wobei der Elektromagnet einen beweglich angeordneten Magnetanker (6) aufweist, mit mindestens zwei voneinander verschiedenen Bestromungszuständen des Elektromagneten und mit mindestens einem elektrischen Schaltmittel (30), welches derart ausgestaltet ist, um den Elektromagneten von einem Bestromungszustand in einen anderen Bestromungszustand umzuschalten, wobei die verschiedenen Bestromungszustände des Elektromagneten durch unterschiedliche Stromstärken des durch den Elektromagneten fließenden Stromes **gekennzeichnet sind,**
**dadurch** gekennzeichnet, dass
der Bestromungszustand des Elektromagneten mittels mindestens eines elektrischen Schaltmittels (30) in Abhängigkeit eines vom Elektromagneten erzeugten magnetischen Feldes oder in Abhängigkeit einer Position des Magnetankers (6) automatisch umgeschaltet wird oder in Abhängigkeit einer Position eines Ventilkolbens (48) eines von dem Magnetventil (2) steuerbaren Ventils automatisch umschaltbar ist.

## Claims

1. Solenoid valve (2) having an electromagnet, wherein the electromagnet has a movably arranged magnet armature (6), with at least two energization states, different from one another, of the electromagnet, and with at least one electrical switching means (30) which is configured to switch the electromagnet from one energization state into another energization state, wherein the different energization states of the electromagnet are **characterized by** different current strengths of the current flowing through the electromagnet,
**characterized in that**
the at least one electrical switching means (30) automatically switches the energization state of the electromagnet
- as a function of a magnetic field which is generated by the electromagnet, or
- as a function of a position of the magnet armature (6),
or
**in that** the energization state of the electromagnet can be switched automatically by means of the electrical switching means (30) as a function of a position of the valve piston (48) of a valve which can be controlled by the solenoid valve (2).

2. Solenoid valve according to Claim 1,
**characterized in that**
the electromagnet has at least two or more component coils (8.1, 8.2), and
in order to bring about a first energization state the component coils (8.1, 8.2) are connected in parallel by means of the at least one electrical switching means (30), or at least one component coil (8.2) is bypassed, and in order to bring about a second energization state the component coils (8.1, 8.2) are connected in series by means of the at least one electrical switching means (30).

3. Solenoid valve according to Claim 1 or 2,
**characterized in that**
at least one electrical switching means (30) is a reed switch.

4. Solenoid valve according to Claim 1 or 2,
**characterized in that**
at least one electrical switching means (30) is a Hall sensor.

5. Solenoid valve according to one of the preceding claims,
**characterized in that**
the electrical switching means (30) is arranged within a magnetic field which is generated by the electromagnet, wherein the electrical switching means (30) can be arranged within a yoke (14) and/or adjacent to an air gap (16) between a core (12) and the movable magnet armature (6).

6. Solenoid valve according to Claim 1 or 2,
**characterized in that**
at least one electrical switching means (30) is a mechanical switch.

7. Solenoid valve according to one of the preceding claims,
**characterized in that**
the energization states of the electromagnet can be switched by means of the electrical switching means (30) together with at least one further electronic component or by means of a switch which is operated by electrical current.

8. Solenoid valve according to one of the preceding claims,
**characterized in that**
the solenoid valve (2) has a C-shaped yoke (14) with a flux directing means (32) for directing the magnetic field.

9. Solenoid valve according to one of the preceding claims,
**characterized in that**
the electrical switching means (30) can be arranged on an electrical line carrier (56), wherein a power supply of the electromagnet can be made available by means of the line carrier (56).

10. Valve device having a main valve and at least one control valve which is configured to actuate the main valve,
**characterized in that**
the control valve is a solenoid valve (2) according to one of Claims 1 to 9.

11. Valve device according to Claim 10,
**characterized by**
a pneumatic supply pressure line (24) with a line branch which is configured to make available the pneumatic supply pressure to the solenoid valve (2) and to at least one further valve which is connected to the solenoid valve (2).

12. Valve device according to Claim 11,
**characterized in that**
the main valve is a relay valve, and
the relay valve is arranged in a first housing part of the valve device, and the electromagnet of the solenoid valve (2) is arranged in a second housing part, wherein the first housing part can be closed by the second housing part.

13. Valve device according to Claim 12,
**characterized in that**
the electrical switching means (30) is configured to switch the energization state of the electromagnet as a function of a predetermined position of a relay valve piston (48) of the relay valve or as a function of a pressure in a pressure chamber of the relay valve.

14. At least one solenoid valve (2) according to one of Claims 1 to 9 and/or at least one valve device (46) according to one of Claims 10 to 13, wherein the at least one solenoid valve and/or the at least one valve device can be used in a compressed air system of a vehicle.

15. Method for operating a solenoid valve (2) having an electromagnet, wherein the electromagnetic has a movably arranged magnet armature (6), with at least two energization states of the electromagnet which are different from one another, and with at least one electrical switching means (30) which is configured to switch the electromagnet from one energization state into another energization state, wherein the different energization states of the electromagnet are **characterized by** different current strengths of the current flowing through the electromagnet,
**characterized in that**
the energization state in the electromagnet is switched automatically by means of at least one electrical switching means (30) as a function of a magnetic field which is generated by the electromagnet or as a function of a position of the magnet armature (6) or can be switched automatically as a function of a position of a valve piston (48) of a valve which can be controlled by the solenoid valve (2) .

## Revendications

1. Électrovanne (2), comprenant un électroaimant, l'électroaimant possédant un induit magnétique (6) monté mobile, comprenant au moins deux états d'alimentation électrique distincts l'un de l'autre de l'électroaimant et comprenant au moins un moyen de commutation électrique (30), lequel est configuré de manière à permuter l'électroaimant d'un état d'alimentation électrique dans un autre état d'alimentation électrique, les différents états d'alimentation électrique de l'électroaimant étant **caractérisés par** des intensités différentes du courant qui circule à travers l'électroaimant,
**caractérisée en ce que**
l'au moins un moyen de commutation électrique (30) permute automatiquement l'état d'alimentation électrique de l'électroaimant
- en fonction d'un champ magnétique généré par l'électroaimant ou
- en fonction d'une position de l'induit magnétique (6)
ou
**en ce que** l'état d'alimentation électrique de l'électroaimant peut être permuté automatiquement à l'aide du moyen de commutation électrique (30) en fonction d'une position d'un piston de vanne (48) d'une vanne qui peut être commandée par l'électrovanne (2).

2. Électrovanne selon la revendication 1,
**caractérisée en ce que**
l'électroaimant possède au moins deux bobines partielles (8.1, 8.2) ou plus et
en vue d'établir un premier état d'alimentation électrique, les bobines partielles (8.1, 8.2) sont branchées en parallèle à l'aide de l'au moins un moyen de commutation électrique (30) ou au moins une bobine partielle (8.2) est court-circuitée et
en vue d'établir un deuxième état d'alimentation électrique, les bobines partielles (8.1, 8.2) sont branchées en série à l'aide de l'au moins un moyen de commutation électrique (30).

3. Électrovanne selon la revendication 1 ou 2, **caractérisée en ce qu'**au moins un moyen de commutation électrique (30) est un commutateur Reed.

4. Électrovanne selon la revendication 1 ou 2, **caractérisée en ce qu'**au moins un moyen de commutation électrique (30) est un capteur à effet Hall.

5. Électrovanne selon l'une des revendications précédentes, **caractérisée en ce que** le moyen de commutation électrique (30) est disposé à l'intérieur d'un champ magnétique généré par l'électroaimant, le moyen de commutation électrique (30) pouvant être disposé à l'intérieur d'une culasse (14) et/ou adjacent à un entrefer (16) entre un noyau (12) et l'induit magnétique (6) mobile.

6. Électrovanne selon la revendication 1 ou 2, **caractérisée en ce qu'**au moins un moyen de commutation électrique (30) est un commutateur mécanique.

7. Électrovanne selon l'une des revendications précédentes, **caractérisée en ce que** les états d'alimentation électrique de l'électroaimant peuvent être permutés à l'aide du moyen de commutation électrique (30) conjointement avec au moins un composant électronique supplémentaire ou au moyen d'un commutateur fonctionnant au courant électrique.

8. Électrovanne selon l'une des revendications précédentes, **caractérisée en ce que** l'électroaimant (2) possède une culasse (14) en forme de C avec un guidage de flux (32) destiné à guider le champ magnétique.

9. Électrovanne selon l'une des revendications précédentes, **caractérisée en ce que** le moyen de commutation électrique (30) peut être disposé au niveau d'un porte-câble (56) électrique, une alimentation électrique de l'électroaimant pouvant être fournie au moyen du porte-câble (56).

10. Dispositif de vanne comprenant une vanne principale et au moins une vanne pilote qui est configurée pour commander la vanne principale,
**caractérisé en ce que**
la vanne pilote est une électrovanne (2) selon l'une des revendications 1 à 9.

11. Dispositif de vanne selon la revendication 10, **caractérisé par** une conduite de pression de réserve (24) pneumatique comprenant une bifurcation de ligne qui est configurée pour fournir la pression de réserve pneumatique à l'électrovanne (2) et au moins à une vanne supplémentaire reliée à l'électrovanne (2).

12. Dispositif de vanne selon la revendication 11, **caractérisé en ce que** la vanne principale est une vanne relais et la vanne relais est disposée dans une première partie de boîtier du dispositif de vanne et l'électroaimant de l'électrovanne (2) dans une deuxième partie de boîtier, la première partie de boîtier pouvant être fermée par la deuxième partie de boîtier.

13. Dispositif de vanne selon la revendication 12, **caractérisé en ce que** le moyen de commutation électrique (30) est configuré pour permuter l'état d'alimentation électrique de l'électroaimant en fonction d'une position prédéterminée d'un piston de vanne relais (48) de la vanne relais ou en fonction d'une pression dans une chambre de pression de la vanne relais.

14. Au moins une électrovanne (2) selon l'une des revendications 1 à 9 et/ou au moins un dispositif de vanne selon l'une des revendications 10 à 13, l'au moins une électrovanne et/ou l'au moins un dispositif de vanne pouvant être utilisé ou utilisés dans un système d'air comprimé d'un véhicule.

15. Procédé pour faire fonctionner une électrovanne (2), comprenant un électroaimant, l'électroaimant possédant un induit magnétique (6) monté mobile, comprenant au moins deux états d'alimentation électrique distincts l'un de l'autre de l'électroaimant et comprenant au moins un moyen de commutation électrique (30), lequel est configuré de manière à permuter l'électroaimant d'un état d'alimentation électrique dans un autre état d'alimentation électrique, les différents états d'alimentation électrique de l'électroaimant étant **caractérisés par** des intensités différentes du courant qui circule à travers l'électroaimant,
**caractérisée en ce que**
l'état d'alimentation électrique de l'électroaimant est permuté automatiquement à l'aide d'au moins un moyen de commutation électrique (30) en fonction d'un champ magnétique généré par l'électroaimant ou en fonction d'une position de l'induit magnétique (6) ou peut être permuté automatiquement en fonction d'une position d'un piston de vanne (48) d'une vanne qui peut être commandée par l'électrovanne (2).
